# EUROPÄISCHE PATENTANMELDUNG

(11) **EP 3 527 275 A1**
(43) Veröffentlichungstag der Anmeldung: **21.08.2019**
(21) Anmeldenummer: 19155872.5
(22) Anmeldetag: 07.02.2019
(51) Int. Cl.: B01D 19/00, A23L 3/015

(54) **VERFAHREN UND VORRICHTUNG ZUM HALTBARMACHEN VON FLÜSSIGKEITEN MITTELS ULTRAHOCHDRUCK- HOMOGENISIERUNG**

(30) Priorität: 20.02.2018 DE 102018202518
(71) Anmelder: KRONES Aktiengesellschaft, 93073 Neutraubling (DE)
(72) Erfinder: Feilner, Roland, 93073 Neutraubling (DE)
(74) Vertreter: Grünecker Patent- und Rechtsanwälte PartG mbB

(57) **Zusammenfassung**

Die Erfindung betrifft eine Vorrichtung und ein Verfahren zur Haltbarmachung von Flüssigkeiten umfassend: ein Entgasen (103, 203) der Flüssigkeit bei einer ersten Temperatur, sowie eine Ultrahochdruck-Homogenisierung (104, 204) der Flüssigkeit bei einer zweiten Temperatur, wobei die zweite Temperatur über der ersten Temperatur liegt.

## Beschreibung

### Stand der Technik

Die Erfindung betrifft ein Verfahren der im Oberbegriff des Patentanspruchs 1 angegebenen Art, ein System der im Oberbegriff des Patentanspruchs 12 angegebenen Art, sowie eine Anlage der im Oberbegriff des Patentanspruchs 16 angegebenen Art.

In Anlagen der Lebensmittel- und Getränkeindustrie spielt die Haltbarmachung von Produkten, insbesondere von Flüssigkeiten, wie beispielsweise Säften oder Milch, eine wichtige Rolle.

Hierzu ist es unter anderem bekannt verschiedene Sterilisationsmethoden einzusetzen, bei denen das Produkt erhitzt und bei Erreichen einer vorgegebenen Sterilisationstemperatur sterilisiert wird.

Dabei kann das Produkt beispielsweise durch Druckbeaufschlagung, insbesondere durch mechanische Druckbeaufschlagung, zunächst komprimiert und somit auf eine vorgegebene Sterilisationstemperatur erhitzt werden und anschließend durch Entspannung wieder abgekühlt werden.

Als ein Beispiel für ein derartiges Hochdruckverfahren zur Sterilisierung von Produkten sei hier die in der EP 2 409 583 B1 beschriebene Ultrahochdruck-Homogenisierung (UHDH) genannt.

Nachteilig an bekannten auf Hochdruckverfahren basierenden Anlagen und Verfahren zum Haltbarmachen von Flüssigkeiten sind unter anderem mögliche Beeinträchtigungen der Produktqualität sowie eine mangelnde Energieeffizienz.

### Aufgabe

Es ist somit Aufgabe der Erfindung ein System und ein Verfahren zur Haltbarmachung von Produkten, insbesondere von Flüssigkeiten, zu verbessern, insbesondere z.B. hinsichtlich der Produktqualität sowie der Energieeffizienz.

### Lösung

Dies wird erfindungsgemäß durch ein Verfahren nach Anspruch 1, ein System nach Anspruch 12 und eine Anlage nach Anspruch 16 erreicht. Vorteilhafte Ausführungsformen und Weiterbildungen sind Gegenstand der Unteransprüche.

Ein beispielhaftes Verfahren zur Haltbarmachung von Flüssigkeiten kann dabei folgende Schritte umfassen:
- wenigstens ein Entgasen der Flüssigkeit bei einer ersten Temperatur, sowie
- wenigstens eine Ultrahochdruck-Homogenisierung der Flüssigkeit bei einer zweiten Temperatur, wobei die zweite Temperatur über der ersten Temperatur liegen kann.

Unter zu behandelnden bzw. haltbar zu machenden Flüssigkeiten können dabei insbesondere z.B. flüssige Produkte wie Getränke bzw. flüssige Lebensmittel, wie beispielsweise Säfte oder Milch, verstanden werden. Ebenso können unter besagten Flüssigkeiten insbesondere pumpbare Flüssigkeiten verstanden werden.

Ein vorangehend beschriebenes mögliches Verfahren kann unter anderem die Haltbarkeit und die Qualität flüssiger Produkte verbessern.

Beispielsweise kann eine die Qualität, z.B. das Aroma, und die Haltbarkeit des Produktes beeinträchtigende Oxidationswirkung durch unerwünschte im Produkt gelöste Gase, wie insbesondere z.B. Sauerstoff, reduziert bzw. vermieden werden indem besagte unerwünschte mögliche im Produkt gelöste Gase durch die Entgasung aus dem Produkt entfernt werden können. In dem hier beispielhaft beschriebenen Verfahren kann dabei jedoch die Produktzusammensetzung unverändert gelassen werden, d.h. es werden beispielsweise keine zusätzlichen Stoffe, z.B. Konservierungsstoffe, dem Produkt zugeführt. Insbesondere wird beispielsweise die Produktzusammensetzung zwischen dem Entgasen des Produktes und der Ultrahochdruck-Homogenisierung des Produktes nicht verändert. Es findet beispielsweise also keine Änderung der stofflichen Zusammensetzung der haltbarzumachenden Flüssigkeit während oder zwischen dem Entgasen der Flüssigkeit bei einer ersten Temperatur und der Ultrahochdruck-Homogenisierung der Flüssigkeit bei einer zweiten Temperatur statt.

Anders ausgedrückt kann das hier beschriebene beispielhafte Verfahren als reines Ein-Strom-Verfahren mit einem einzigen in seiner stofflichen Zusammensetzung unveränderten Produktstrom aufgefasst werden.

In dem hier beispielhaft beschriebenen Verfahren kann dabei die Flüssigkeit vor dem Entgasen durch Erwärmung auf die erste / eine erste vorgebbare Temperatur gebracht werden.

Eine mögliche Erwärmung der Flüssigkeit auf eine erste / besagte erste Temperatur vor dem Entgasen kann den Entgasungsvorgang erleichtern, da die Permeation von im Produkt gelösten unerwünschten Gasen erhöht werden kann und so die unerwünschten Gasen leichter aus dem Produkt entfernt werden können.

Besagte beispielhafte erste Temperatur kann dabei im Bereich von 30°C bis 90°C, insbesondere z.B. im Bereich von 50°C bis 70°C, liegen.

Das mögliche Entgasen der Flüssigkeit kann im Übrigen mittels Druckentgasung und/oder Vakuumentgasung und/oder Membranentgasung und/oder mittels Ultraschall erfolgen.

Beim Entgasen der Flüssigkeit kann optional zudem ein Strippgas, z.B. umfassend Inertgase wie Stickstoff oder Edelgas, Kohlendioxid oder Wasserstoff oder eine Kombination genannter Gase, eingesetzt werden.

Alternativ oder zusätzlich kann eine Vakuumentgasung im Rieselfilm erfolgen.

In dem beispielhaften Verfahren zur Haltbarmachung kann die Flüssigkeit vor der Ultrahochdruck-Homogenisierung bzw. nach der Entgasung z.B. durch eine weitere Erwärmung auf eine zweite / besagte zweite Temperatur gebracht werden, wobei die besagte zweite Temperatur über der ersten Temperatur bei der die Entgasung durchgeführt werden kann, liegen kann.

Besagte beispielhafte Erwärmung auf die besagte zweite Temperatur kann dabei jedoch auch beispielsweise durch die Ultrahochdruck-Homogenisierung selbst erfolgen.

Mit anderen Worten ist es denkbar, dass die beispielhafte mögliche erste Temperatur der Flüssigkeit bei der die Entgasung durchgeführt werden kann, eine geeignete Ausgangstemperatur bzw. Anfangstemperatur für die Ultrahochdruck-Homogenisierung sein kann.

Ebenso ist es jedoch vorstellbar, dass alternativ oder zusätzlich besagte beispielhafte Erwärmung auf die besagte zweite Temperatur durch andere direkte oder indirekte Mittel zur Temperierung, beispielsweise durch mögliche optionale Wärmetauscher erfolgen kann.

Anders ausgedrückt ist es vorstellbar, dass die Flüssigkeit beispielsweise bei Beginn der Ultrahochdruck-Homogenisierung bereits besagte beispielhafte zweite Temperatur aufweisen kann. Es ist also möglich, dass die beispielhafte mögliche erste Temperatur der Flüssigkeit bei der die Entgasung durchgeführt werden kann oder besagte beispielhafte zweite Temperatur, beispielsweise eine Eintrittstemperatur der zu behandelnden Flüssigkeit bei Eintritt in eine Ultrahochdruck-Homogenisierungsvorrichtung sein kann.

Während der Ultrahochdruck-Homogenisierung kann jedoch beispielsweise auf Grund einer Druckerhöhung und Komprimierung der Flüssigkeit eine weitere Temperaturerhöhung erfolgen, z.B. eine weitere Temperaturerhöhung auf eine mögliche beispielhafte dritte Temperatur.

Diese beispielhafte mögliche dritte Temperatur kann dabei über der besagten beispielhaften zweiten Temperatur liegen, also somit ebenfalls über der besagten beispielhaften der ersten Temperatur liegen bei der die Entgasung durchgeführt werden kann.

Der Wert der besagten möglichen dritten Temperatur kann dabei unter anderem vom Druck bzw. vom Druckverhältnis während der Ultrahochdruck-Homogenisierung und von der beispielhaften zweiten Temperatur (bei Beginn der der Ultrahochdruck-Homogenisierung, beispielhafte Ausgangstemperatur bzw. Anfangstemperatur der Flüssigkeit bei Eintritt in die Ultrahochdruck-Homogenisierungsvorrichtung) abhängen.

Beispielsweise kann also die durch Ultrahochdruck-Homogenisierung behandelte Flüssigkeit bei Austritt aus einer beispielhaften Ultrahochdruck-Homogenisierungsvorrichtung besagte beispielhafte zweite Temperatur oder besagte beispielhafte dritte Temperatur als Austrittstemperatur aufweisen.

Im Übrigen kann die Ultrahochdruck-Homogenisierung bei einem Druck zwischen 200 und 600 MPa durchgeführt werden.

Besagte mögliche beispielhafte zweite Temperatur kann dabei unter anderem abhängig sein vom Produkttyp bzw. von der Art der zu behandelnden Flüssigkeit, und beispielsweise bei Beginn der Ultrahochdruck-Homogenisierung in einem Temperaturbereich zwischen 40°C und 90°C liegen.

Nach der möglichen Ultrahochdruck-Homogenisierung kann die Flüssigkeit abgekühlt werden.

Dabei kann die durch die Abkühlung gewonnene Wärme genutzt werden zur Erwärmung der Flüssigkeit auf besagte / die erste Temperatur und/oder zur Erwärmung der Flüssigkeit auf besagte / die zweite Temperatur.

Beispielsweise kann eine Produkt / Produkt (P/P)-Regeneration erfolgen, worin beispielsweise auf einer/der Primärseite eines beispielhaften Systems bzw. Systemkreislaufs, das heiße, haltbargemachte bzw. pasteurisierte Produkt (die heiße, haltbargemachte bzw. pasteurisierte Flüssigkeit), z.B. mittels Wärmetauscher, Wärme übertragen kann auf eine Sekundärseite des/eines beispielhaften Systems bzw. Systemkreislaufs, worin das aufzuwärmende, noch nicht haltbargemachte bzw. noch nicht pasteurisierte Produkt (die aufzuwärmende, noch nicht haltbargemachte bzw. noch nicht pasteurisierte Flüssigkeit) fließen kann.

Alternativ oder zusätzlich kann eine Produkt / Wasser (P/W) - Regeneration erfolgen, worin beispielsweise für die Erwärmung bzw. für die Erhitzung des Produktes (die aufzuwärmende, noch nicht haltbargemachte bzw. noch nicht pasteurisierte Flüssigkeit), bzw. für die Abkühlung des Produktes (die heiße, haltbargemachte bzw. pasteurisierte Flüssigkeit) getrennte, separate Wärmetauscher verwendet werden können, welche beispielsweise mittels eines Wasserkreislaufs gekoppelt sein können.

Es kann also eine Wärmerückgewinnung erfolgen, welche die Energieeffizienz des möglichen Verfahrens zur Haltbarmachung von Flüssigkeiten verbessern kann.

Die / eine mittels Ultrahochdruck-Homogenisierung behandelte / haltbargemachte Flüssigkeit kann anschließend hygienisch oder aseptisch gepuffert bzw. hygienisch oder aseptisch gelagert und/oder hygienisch oder aseptisch abgefüllt werden.

Ein beispielhaftes System zur Haltbarmachung von Flüssigkeiten kann folgende Komponenten umfassen:
- wenigstens eine Entgasungsvorrichtung, die dazu konfiguriert sein kann eine Flüssigkeit bei einer ersten Temperatur zu entgasen, und
- wenigstens eine Ultrahochdruck-Homogenisierungsvorrichtung, die dazu konfiguriert sein kann eine Ultrahochdruck-Homogenisierung der Flüssigkeit bei einer zweiten Temperatur durchzuführen, wobei die zweite Temperatur über der ersten Temperatur liegen kann.

Ein derartiges System kann insbesondere die Haltbarkeit und Qualität flüssiger Produkte im Vergleich zu bekannten System und Anlagen verbessern, da insbesondere z.B. ein die Haltbarkeit und Qualität von flüssigen Produkten beeinträchtigendes oxidatives Potenzial reduziert werden kann, indem beispielsweise unerwünschte im Produkt gelöste Gase mit oxidativer Wirkung, z.B. Sauerstoff, aus dem Produkt entfern werden können. Dies kann unter anderem auch zu einem verbesserten Aroma des Produktes beitragen, da z.B. während der Ultrahochdruck-Homogenisierung vermieden werden kann, dass Sauerstoff das Aroma des Produktes beeinträchtigt.

Besagtes beispielhaftes System kann ferner wenigstens ein Mittel, z.B. einen Wärmetauscher, umfassen, welches / welcher konfiguriert sein kann zur Erwärmung der Flüssigkeit auf die / eine erste Temperatur vor dem Entgasen der Flüssigkeit.

Beispielsweise auf eine erste Temperatur im vorhergehend angegeben Bereich, d.h. beispielsweise im Bereich von 30°C bis 90°C, insbesondere z.B. im Bereich von 50°C bis 70° C.

Darüber hinaus kann das beispielhafte System im Weiteren wenigstens ein Mittel, z.B. einen weiteren Wärmetauscher, aufweisen, welches / welcher konfiguriert sein kann zur Erwärmung der Flüssigkeit auf die / eine zweite Temperatur nach dem Entgasen der Flüssigkeit. Besagte mögliche zweite Temperatur kann dabei über der besagten beispielhaften ersten Temperatur liegen.

Zudem kann das beispielhafte System im Weiteren wenigstens ein Mittel, z.B. einen weiteren Wärmetauscher, aufweisen, welches / welcher dazu konfiguriert sein kann eine Abkühlung der durch die Ultrahochdruck-Homogenisierung behandelten bzw. erwärmten Flüssigkeit durchzuführen.

Dabei kann das System z.B. dazu konfiguriert sein, die durch die Abkühlung gewonnene Wärme zur Erwärmung der Flüssigkeit auf die erste Temperatur und/oder zur Erwärmung der Flüssigkeit auf die zweite Temperatur nutzen zu können.

Das beispielhafte System kann also eine Wärmerückgewinnung ermöglichen, die die Energieeffizienz des / eines möglichen Verfahrens zur Haltbarmachung von Flüssigkeiten verbessern kann.

Ein hierein beschriebenes beispielhaftes System zur Haltbarmachung von Flüssigkeiten kann dabei unter anderem in einer Abfüllanlage, insbesondere einer Getränkeabfüllanlage zur Abfüllung von Behältern, insbesondere Getränkebehältern wie Fässern oder Flaschen, eingesetzt werden.

Mit anderen Worten kann eine beispielhafte Abfüllanlage beispielsweise wenigstens eine wie hierein beschriebene Entgasungsvorrichtung aufweisen, die dazu konfiguriert sein kann, eine Flüssigkeit bei einer ersten Temperatur entgasen zu können, sowie wenigstens eine Ultrahochdruck-Homogenisierungsvorrichtung, die dazu konfiguriert sein kann, eine Ultrahochdruck-Homogenisierung der Flüssigkeit bei einer zweiten Temperatur durchführen zu können, wobei die zweite Temperatur über der ersten Temperatur liegen kann.

Auch kann besagte beispielhafte Abfüllanlage unter anderem dazu konfiguriert sein, eine durch Ultrahochdruck-Homogenisierung behandelte bzw. haltbargemachte Flüssigkeit hygienisch oder aseptisch puffern zu können bzw. hygienisch oder aseptisch lagern zu können.

Folgende Figuren stellen beispielhaft dar:
**Fig. 1**: Beispielhaftes System zur Haltbarmachung von Flüssigkeiten
**Fig. 2**: Weiteres beispielhaftes System zur Haltbarmachung von Flüssigkeiten

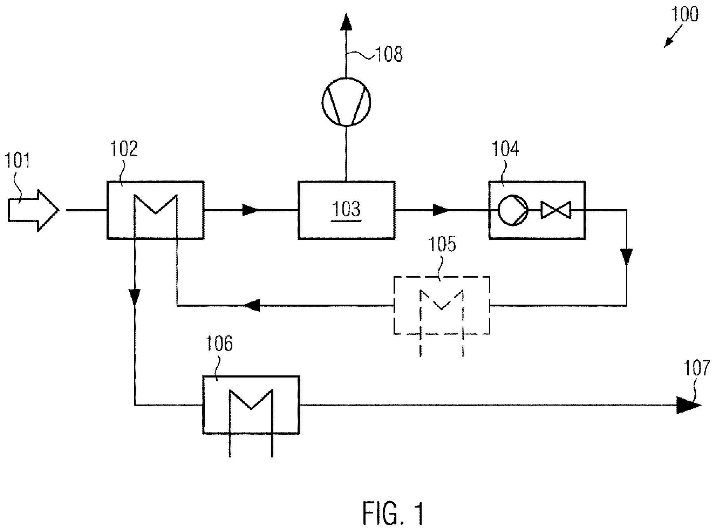

Die **Fig. 1** stellt beispielhaft ein System 100 zur Haltbarmachung von Flüssigkeiten dar.

Dabei kann beispielsweise eine zu behandelnde Flüssigkeit bzw. eine haltbar zumachende Flüssigkeit zunächst einem ersten Mittel 102 zur Temperierung, z.B. Erwärmung, der Flüssigkeit, beispielsweise einem ersten Wärmetauscher 102, zugeführt 101 werden.

Der beispielhafte Wärmetauscher 102 kann dabei die zu behandelnde Flüssigkeit auf eine erste Temperatur erwärmen. Anschließend kann die auf besagte beispielhafte erste Temperatur erwärmte Flüssigkeit einer beispielhaften Entgasungsvorrichtungsvorrichtung 103 zugeführt werden, welche dazu konfiguriert sein kann, unerwünschte Gase aus der zu behandelnden Flüssigkeit zu entfernen und abzuführen 108.

Beispielhafte Temperaturbereiche für besagte erste Temperatur bei der eine Entgasung durchgeführt werden kann, können z.B. im Bereich von 30°C bis 90° C, insbesondere z.B. im Bereich von 50°C bis 70° C, liegen.

Das beispielhafte System 100 kann zudem eine beispielhafte Ultrahochdruck-Homogenisierungsvorrichtung 104 aufweisen, welche dazu konfiguriert sein kann die zu behandelnde Flüssigkeit bei einer zweiten Temperatur, welche oberhalb der besagten beispielhaften ersten Temperatur liegen kann, zu sterilisieren bzw. haltbar zu machen.

Besagte beispielhafte Erwärmung auf die besagte zweite Temperatur kann dabei beispielsweise durch die Ultrahochdruck-Homogenisierung selbst erfolgen und/oder durch andere Mittel zur Temperierung, beispielsweise durch mögliche optionale Wärmetauscher (nicht dargestellt).

Nach der Ultrahochdruck-Homogenisierung der Flüssigkeit durch die beispielhafte Ultrahochdruck-Homogenisierungsvorrichtung 104 kann die durch die Ultrahochdruck-Homogenisierung erhitzte Flüssigkeit optional abgekühlt werden, beispielsweise über einen möglichen weiteren Wärmetauscher 105.

Diese optionale Abkühlung kann beispielsweise durchgeführt werden, wenn die Temperatur der erhitzten haltbargemachten Flüssigkeit über einem vorgegebenen Wert, bzw. über einer vorgegebenen Temperaturdifferenz, z.B. einer Differenz von mehr als 10 K zwischen einer/der Primärseite und einer/der Sekundärseite der Ultrahochdruck-Homogenisierung, bzw. z.B. bei einer Differenz von mehr als 10 K zwischen Austrittstemperatur und Eintrittstemperatur der Flüssigkeit bei der Ultrahochdruck-Homogenisierung.

Die mögliche, aus einer Abkühlung der durch die Ultrahochdruck-Homogenisierung erhitzten Flüssigkeit beispielhafte gewonnene Wärme kann dabei ihrerseits optional dazu genutzt werden, die zugeführte 101 zu behandelnde Flüssigkeit auf besagte beispielhafte erste Temperatur erhitzten zu können. Sollte beispielsweise die mögliche zurückgewinnbare Wärmemenge nach der Ultrahochdruck-Homogenisierung nicht ausreichen, um die Flüssigkeit auf die erste Temperatur zu erwärmen, kann optional noch externe Wärmeenergie verwendet werden.

Fall erforderlich kann das beispielhafte System 100 zudem ein weiteres Mittel 106 zur Temperierung der durch Ultrahochdruck-Homogenisierung behandelten Flüssigkeit, z.B. einen weiteren Wärmetauscher 106, aufweisen, um die Flüssigkeit auf eine gewünschte Temperatur zu temperieren, z.B. abzukühlen, bevor die Flüssigkeit das System 100 verlässt 107 und beispielsweise einer aseptischen Pufferung bzw. aseptischen Lagerung und/oder einer aseptischen Abfüllung (nicht dargestellt) zugeführt werden kann.

Der Vollständigkeit halber sei erwähnt, dass die beispielhaften Pfeile, welche nicht mit gesonderten Bezugszeichen versehen sind, eine mögliche beispielhafte Prozessrichtung bzw. Flussrichtung der Flüssigkeit im System darstellen und einen beispielhaften offenen Verlauf der Flüssigkeit von Zufuhr 101 bis Abfuhr 107 darstellen zu können, worin wahlweise z.B. ein durch die Ultrahochdruck-Homogenisierung erzeugter Wärmeüberschuss zur Erwärmung der zu behandelnden Flüssigkeit auf besagte beispielhafte erste Temperatur genutzt werden kann.

Im dargestellten beispielhaften Verlauf der Flüssigkeit durch das System 100 kann eine zu behandelnde Flüssigkeit jede mögliche Station, also beispielsweise die Entgasungsvorrichtung 103, die Ultrahochdruck-Homogenisierungsvorrichtung 104 und die Mittel 102, 105, 106 einmal (in einer vorgegebenen Richtung) durchlaufen bevor die (behandelte) Flüssigkeit das System 100 wieder verlässt 107.

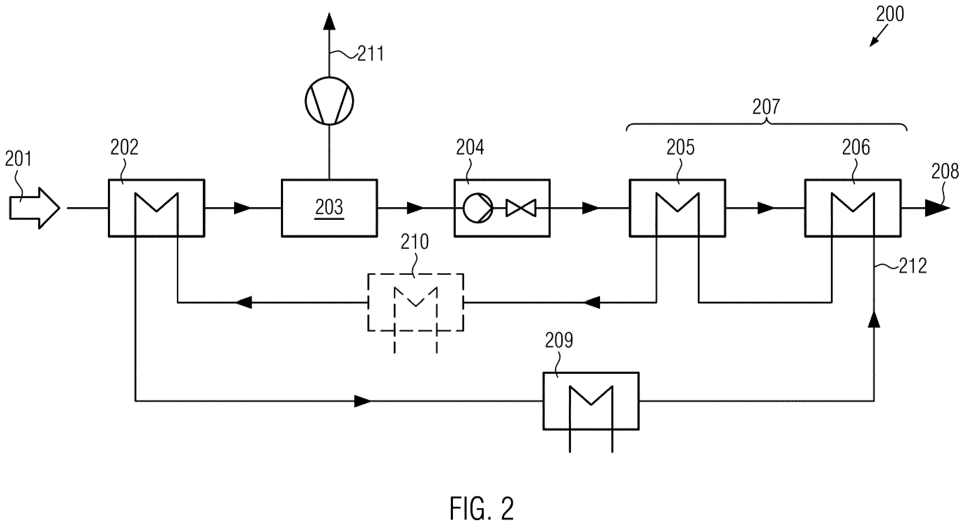

Die **Fig. 2** stellt beispielhaft ein weiteres System 200 zur Haltbarmachung von Flüssigkeiten dar zur Illustration von Aspekten der Erfindung.

Analog zum System 100 weist das beispielhafte System 200 ein beispielhaftes erstes Mittel 202 zur Temperierung, z.B. Erwärmung, der über eine Zufuhr 201 zugeführten zu behandelnden Flüssigkeit, beispielsweise einen ersten Wärmetauscher 202, auf.

Der mögliche beispielhafte Wärmetauscher 202 kann dabei die zu behandelnde Flüssigkeit auf eine erste Temperatur erwärmen. Anschließend kann die auf besagte beispielhafte erste Temperatur erwärmte Flüssigkeit einer beispielhaften Entgasungsvorrichtungsvorrichtung 203 zugeführt werden, welche dazu konfiguriert sein kann, unerwünschte Gase aus der zu behandelnden Flüssigkeit zu entfernen und abzuführen 211.

Beispielhafte Temperaturbereiche für besagte erste Temperatur bei der eine Entgasung durchgeführt werden kann, können z.B. im Bereich von 30°C bis 90° C, insbesondere z.B. im Bereich von 50°C bis 70° C, liegen.

Das beispielhafte System 200 kann zudem eine beispielhafte Ultrahochdruck-Homogenisierungsvorrichtung 204 aufweisen, welche dazu konfiguriert sein kann die zu behandelnde Flüssigkeit bei einer zweiten Temperatur, welche oberhalb der besagten beispielhaften ersten Temperatur liegen kann, zu sterilisieren bzw. haltbar zu machen.

Das System 200 kann darüber hinaus ein beispielhaftes weiteres Mittel 207 zur Temperierung, z.B. zur Abkühlung, der Flüssigkeit umfassen. Besagtes beispielhafte Mittel 207 kann dabei z.B. als Wärmetauscher bzw. als Wärmetauscherblock ausgeführt sein, der z.B. eine Vielzahl von Wärmetauschern, beispielsweise Wärmetauscher 205, 206, umfassen kann.

Besagtes Mittel 207 bzw. besagte beispielhafte Wärmetauscher 205, 206 können dazu konfiguriert sein, die mittels Ultrahochdruck-Homogenisierung behandelte Flüssigkeit auf eine gewünschte Temperatur zu temperieren, insbesondere beispielsweise abzukühlen.

Das System 200 kann dabei so konfiguriert sein, dass die aus der Abkühlung der von der Ultrahochdruck-Homogenisierung erhitzten Flüssigkeit zurückgewonnene Wärme genutzt werden kann um beispielsweise (wie dargestellt) die zugeführte 201 zu behandelnde Flüssigkeit auf besagte beispielhafte erste Temperatur erhitzten zu können und/oder um nach einer beispielhaften Entgasung durch die Entgasungsvorrichtung 203 die entgaste Flüssigkeit auf eine / besagte zweite beispielhafte Temperatur zu erwärmen (nicht dargestellt) zur Ultrahochdruck-Homogenisierung.

Im Unterschied zum System 100, kann im beispielhaft dargestellten System 200 eine Wärmerückgewinnung der Wärmeenergie der durch die Ultrahochdruck-Homogenisierung erhitzten Flüssigkeit mittels eines separaten Wasserkreislaufs 212 erfolgen.

Hierzu können beispielsweise weitere Mittel 209, 210, z.B. weitere Wärmetauscher, eingesetzt werden.

Die behandelte haltbargemachte Flüssigkeit kann das System 200 verlassen 208 und beispielsweise einer aseptischen Pufferung bzw. aseptischen Lagerung und/oder einer aseptischen Abfüllung (nicht dargestellt) zugeführt werden.

Analog zum Beispiel der Fig. 1 kennzeichnen die beispielhaften Pfeile in der Fig. 2, welche nicht mit gesonderten Bezugszeichen versehen sind, ebenfalls mögliche beispielhafte Prozessrichtungen bzw. Flussrichtungen der Flüssigkeit im System.

Es folgen 2 Blatt mit 2 Figuren.

Die Bezugszeichen sind dabei wie folgt belegt.
- **100**: Beispielhaftes System zur Haltbarmachung von Flüssigkeiten
- **101**: Beispielhafte Zufuhr von (unbehandelter) Flüssigkeit / zu behandelnder Flüssigkeit
- **102**: Beispielhaftes (erstes) Mittel zur Temperierung, z.B. Erwärmung, der Flüssigkeit, beispielhafter (erster) Wärmetauscher
- **103**: Beispielhafte Entgasungsvorrichtung
- **104**: Beispielhafte Ultrahochdruck-Homogenisierungsvorrichtung
- **105**: Beispielhaftes (zweites) Mittel zur Temperierung, z.B. Abkühlung, der Flüssigkeit, beispielhafter (zweiter) Wärmetauscher
- **106**: Beispielhaftes (drittes) Mittel zur Temperierung, z.B. Abkühlung, der Flüssigkeit, beispielhafter (dritter) Wärmetauscher beispielhafter (zweiter) Wärmetauscher
- **107**: Beispielhafter Austritt / beispielhafte Abfuhr von behandelter / haltbar gemachter Flüssigkeit
- **108**: Beispielhaftes entweichendes Gas / aus der Flüssigkeit entferntes Gas

- **200**: Beispielhaftes alternatives System zur Haltbarmachung von Flüssigkeiten
- **201**: Beispielhafte Zufuhr von Flüssigkeit / zu behandelnder Flüssigkeit
- **202**: Beispielhaftes (erstes) Mittel zur Temperierung, z.B. Erwärmung, der Flüssigkeit, beispielhafter (erster) Wärmetauscher
- **203**: Beispielhafte Entgasungsvorrichtung
- **204**: Beispielhafte Ultrahochdruck-Homogenisierungsvorrichtung
- **205**: Beispielhaftes (zweites) Mittel zur Temperierung, z.B. Abkühlung, der Flüssigkeit, beispielhafter (zweiter) Wärmetauscher
- **206**: Beispielhaftes (drittes) Mittel zur Temperierung, z.B. Abkühlung, der Flüssigkeit, beispielhafter (dritter) Wärmetauscher
- **207**: Beispielhaftes Mittel zur Temperierung, z.B. Abkühlung, der Flüssigkeit, beispielhafter Wärmetauscherblock umfassend Wärmetauscher 205, 206
- **208**: Beispielhafter Austritt / beispielhafte Abfuhr von behandelter / haltbar gemachter Flüssigkeit
- **209**: Beispielhaftes (viertes) Mittel zur Temperierung, z.B. Abkühlung, der Flüssigkeit, beispielhafter (vierter) Wärmetauscher
- **210**: Beispielhaftes (fünftes) Mittel zur Temperierung, z.B. Abkühlung, der Flüssigkeit, beispielhafter (fünfter) Wärmetauscher
- **211**: Beispielhaftes entweichendes Gas / aus der Flüssigkeit entferntes Gas
- **212**: Beispielhafter Wasserkreislauf für beispielhafte Wärmerückgewinnung

## Patentansprüche

1. Verfahren zur Haltbarmachung von Flüssigkeiten umfassend:
Entgasen (103, 203) der Flüssigkeit bei einer ersten Temperatur,
Ultrahochdruck-Homogenisierung (104, 204) der Flüssigkeit bei einer zweiten Temperatur, wobei die zweite Temperatur über der ersten Temperatur liegt.

2. Verfahren nach Anspruch 1 wobei die Flüssigkeit vor dem Entgasen (103, 203) durch Erwärmung auf die erste Temperatur gebracht wird.

3. Verfahren nach einem der vorherigen Ansprüche wobei die Flüssigkeit vor der Ultrahochdruck-Homogenisierung (104, 204) durch Erwärmung auf die zweite Temperatur gebracht wird.

4. Verfahren nach einem der vorherigen Ansprüche wobei die durch die Ultrahochdruck-Homogenisierung (104, 204) behandelte Flüssigkeit abgekühlt wird.

5. Verfahren nach einem der vorherigen Ansprüche wobei die durch die Ultrahochdruck-Homogenisierung (104, 204) behandelte Flüssigkeit abgekühlt wird und die durch die Abkühlung gewonnene Wärme genutzt wird zur Erwärmung der Flüssigkeit auf die erste Temperatur und/oder zur Erwärmung der Flüssigkeit auf die zweite Temperatur.

6. Verfahren nach einem der vorherigen Ansprüche wobei das Entgasen der Flüssigkeit (103, 203) mittels Druckentgasung und/oder Vakuumentgasung und/oder Membranentgasung erfolgt.

7. Verfahren nach dem vorherigen Anspruch wobei beim Entgasen (103, 203) der Flüssigkeit ein Strippgas, z.B. Stickstoff, eingesetzt wird und/oder eine Vakuumentgasung im Rieselfilm erfolgt.

8. Verfahren nach einem der vorherigen Ansprüche wobei die durch die Ultrahochdruck-Homogenisierung (104, 204) behandelte Flüssigkeit hygienisch oder aseptisch gepuffert und/oder hygienisch oder aseptisch abgefüllt wird.

9. Verfahren nach einem der vorherigen Ansprüche wobei die Ultrahochdruck-Homogenisierung (104, 204) bei einem Druck zwischen 200 und 600 MPa durchgeführt wird.

10. Verfahren nach einem der vorherigen Ansprüche wobei die erste Temperatur im Bereich von 30°C bis 90° C, insbesondere z.B. im Bereich von 50°C bis 70° C, liegt.

11. Verfahren nach einem der vorherigen Ansprüche, wobei keine Änderung der stofflichen Zusammensetzung der Flüssigkeit während oder zwischen dem Entgasen (103, 203) der Flüssigkeit bei einer ersten Temperatur und der Ultrahochdruck-Homogenisierung (104, 204) der Flüssigkeit bei einer zweiten Temperatur erfolgt.

12. System (100, 200) zur Haltbarmachung von Flüssigkeiten umfassend:
wenigstens eine Entgasungsvorrichtung (103, 203), die dazu konfiguriert ist, eine Flüssigkeit bei einer ersten Temperatur zu entgasen,
wenigstens eine Ultrahochdruck-Homogenisierungsvorrichtung (104, 204), die dazu konfiguriert, ist eine Ultrahochdruck-Homogenisierung der Flüssigkeit bei einer zweiten Temperatur durchzuführen, wobei die zweite Temperatur über der ersten Temperatur liegt.

13. System (100, 200) nach dem vorherigen Anspruch, ferner umfassend wenigstens ein Mittel (102, 202), z.B. einen Wärmetauscher, konfiguriert zur Erwärmung der Flüssigkeit auf die erste Temperatur vor dem Entgasen der Flüssigkeit,
und/oder umfassend wenigstens ein Mittel, z.B. einen Wärmetauscher, konfiguriert zur Erwärmung der Flüssigkeit auf die zweite Temperatur nach dem Entgasen der Flüssigkeit.

14. System (100, 200) nach einem der vorherigen Systemansprüche, ferner umfassend wenigstens ein Mittel (105, 207), z.B. einen Wärmetauscher, konfiguriert zur Abkühlung der durch die Ultrahochdruck-Homogenisierung behandelten Flüssigkeit.

15. System (100, 200) nach dem vorherigen Systemanspruch, wobei das System dazu konfiguriert ist, die durch die Abkühlung gewonnene Wärme zur Erwärmung der Flüssigkeit auf die erste Temperatur und/oder zur Erwärmung der Flüssigkeit auf die zweite Temperatur zu nutzen.

16. Abfüllanlage, insbesondere Getränkeabfüllanlage zur Abfüllung von Behältern, umfassend ein System (100, 200) zur Haltbarmachung von Flüssigkeiten nach einem der vorherigen Systemansprüche.
